# EUROPEAN PATENT SPECIFICATION

(11) **EP 3 560 682 B1**
(45) Date of publication and mention of the grant of the patent: **14.10.2020**
(21) Application number: 19169752.3
(22) Date of filing: 17.04.2019
(51) Int. Cl.: B29C 64/106, B29C 64/25, B33Y 30/00

(54) **ADDITIVE MANUFACTURING SYSTEM WITH ISOLATED BUILD CHAMBER**
SYSTEM MIT ISOLIERTER AUFBAUKAMMER ZUR GENERATIVEN FERTIGUNG
SYSTÈME DE FABRICATION ADDITIVE AYANT UNE CHAMBRE DE FABRICATION ISOLÉE

(30) Priority: 24.04.2018 NL 2020814
(43) Date of publication of application: 30.10.2019
(73) Proprietor: Ultimaker B.V., 3511 ED Utrecht (NL)
(72) Inventor: HUITEMA, Robert, 6658 LS Beneden Leeuwen (NL); NEUT, Matthijs Wouter Marc, 3701 GM Zeist (NL); VERSTEEGH, Johan Andreas, 4191 LC Geldermalsen (NL); TIMMERS, Marvin Hendrikus Theodorus, 3712 AP Huis ter Heide (NL)
(74) Representative: Nederlandsch Octrooibureau

(56) References cited:
- EP-A1- 3 202 574
- WO-A1-00/78519

## Description

### Field of the invention

The present invention relates to an additive manufacturing system, in particular an additive manufacturing system with isolated build chamber.

### Background art

European patent application EP 3 202 574 A1 which represents the features of the preamble of claim 1 discloses a three-dimensional fabricating apparatus that includes a chamber, a processing space heater, a fabrication unit, and an insulation wall mover. The chamber includes insulation walls and a processing space surrounded by the insulation walls, wherein the processing space heater heats the processing space in the chamber. The fabrication unit fabricates a three-dimensional fabrication object in the processing space heated to a target temperature by the processing space heater. The insulation wall mover displaces at least a part of the insulation walls to increase or decrease a volume of the processing space.

International application WO 00/78519 A1 describes a three-dimensional modeling apparatus that builds up three-dimensional objects in a heated build chamber by dispensing modeling material from a dispensing head onto a base in a pattern determined by control signals from a controller. The motion control components of the apparatus are external to and thermally isolated from the build chamber. A deformable thermal insulator forms a ceiling of the build chamber, allowing motion control of the dispensing head in an x, y plane by an x-y gantry located outside of and insulated from the build chamber. The x-y gantry comprises a carriage having mounted thereon an extrusion head for movement thereof in the x, y plane. In an embodiment, the deformable thermal insulator comprising two sets of insulating accordion-folding baffles, comprising x-baffles that compress and expand with the movement of the carriage along an x-rails and y-baffles that compress and expand with the movement of the carriage along y-rails.

The accordion-folding baffles as described above have limited scalability in that such baffles do not allow large distances to be covered as this would yield a relatively large folded pack when the baffles are compressed, thereby limiting movement of the extrusion head along the ceiling of the build chamber. Furthermore, achieving reliable sealing between engaging sides of the x- and y-folded baffles is relatively difficult. Another problem associated with an accordion-folding design is that the compressible and expandable baffles behave like spring elements and as such impose forces resisting the motion of the x-y gantry when the baffles are compressed and/or expanded.

### Summary of the invention

The present invention aims to provide an improved additive manufacturing system having an isolated build chamber which is scalable and which provides increased freedom of movement for modelling within the build chamber whilst maintaining sealed closure thereof.

According to the present invention, an additive manufacturing system of the type defined in the preamble is provided, comprising a box-shaped build chamber having a plurality of sides enclosing a build space, an object support base movably arranged in a z-direction in the build space, an x-y gantry having mounted thereon a nozzle head assembly for depositing modelling material onto the object support base and wherein the x-y gantry is configured to move the nozzle head assembly relative to the object support base, wherein the additive manufacturing system further comprises
a plurality of roller units evenly arranged along a circumference of one side of the plurality of sides of the build chamber, wherein each roller unit comprises a cover sheet rolled at least in part into coil form and wherein each cover sheet extends from the roller unit to the nozzle head assembly for closing the build chamber there between, and wherein each roller unit is configured to allow the cover sheet to coil and uncoil in correspondence to the movement of the nozzle head assembly.

According to the present invention, the plurality of roller units and cover sheets provide significant advantages over e.g. accordion-folded baffles. In particular, the roller units are scalable in the sense that longer distances can be readily covered by providing roller units with longer or larger pieces of cover sheets without adding any significant weight and/or resistance to coiling and uncoiling.

Another advantage of the present invention is that when the nozzle head assembly moves toward a side of the build chamber, a roller unit associated with that side does not prematurely block movement of the nozzle head assembly as the cover sheets can be coiled/retracted as much as needed. As a result, there is more freedom for the nozzle head assembly to move in the x-y plane for a given size of a build chamber.

In an embodiment, each cover sheet is configured as a self-uncoiling cover sheet, wherein each cover sheet exhibits a bias toward uncoiling and to fully open and unroll toward a flat sheet if no bending forces are imposed. Such self-uncoiling behaviour allows each cover sheet to span the space between the nozzle head assembly and a roller unit with maximized flatness and minimal sagging.

In an embodiment, each cover sheet comprises a fibrous core layer and smooth outer surface coatings, thereby providing sufficient flexibility for (un)coiling a cover sheet but to also allow for self-uncoiling behavior due to bending resistance imposed by the smooth outer surface coatings. In an exemplary embodiment, the fibrous core layer may be a glass fiber core layer and the smooth outer surface coatings may comprise PTFE (polytetrafluoroethylene) for thermal insulation of the build chamber.

In alternative embodiment, each cover sheet is made of a uniform and homogenous sheet material. The homogenous sheet material provides resistance to bending and is configured to provide self-uncoiling behavior and thus biases the cover sheets to unroll as flat sheets when no bending forces are imposed. In an exemplary embodiment, the homogenous sheet material may be polyetherimide (PEI), polycarbonate (PC), polyethylene terephthalate (PET) or PTFE.

### Brief description of the drawings

The present invention will be discussed in more detail below, with reference to the attached drawings, in which
Figure 1 shows a three dimensional view of an additive manufacturing system according to an embodiment of the present invention;
Figure 2 shows a three dimensional view of a plurality of roller units and cover sheets according to an embodiment of the present invention;
Figure 3 shows a cross section of a cover sheet in a retracted coil configuration according to an embodiment of the present invention;
Figure 4 shows a cross section of a cover sheet in an extended coil configuration according to an embodiment of the present invention;
Figure 5 shows a cross section of a housing for a roller unit according to an embodiment of the present invention;
Figure 6A shows a cross section of a round shaft as used for a roller unit according to an embodiment of the present invention; and
Figure 6B shows a cross section of a rectangular/square shaft as used for a roller unit according to an embodiment of the present invention.

### Detailed description of the embodiments

For additive manufacturing , such as fused deposition modelling (FDM), it is often advantageous to provide a sealed enclosure in which objects can be modelled, wherein the sealed enclosures provides a controlled build environment with optimized modelling parameters such as temperature, humidity, particle concentration and the like.

To provide such a sealed enclosure known additive manufacturing systems typically utilize a box-shaped build chamber enclosing a build space with a controlled environment while building an object. However, one of the difficulties in providing such a build chamber is maintaining a properly sealed controlled build environment whilst allowing various system components, such as a modelling/depositing mechanism, to access the build space without negatively impacting the controlled build environment.

In view of the above, there is a need for an additive manufacturing system which provides a reliable sealed interface between a build chamber and external system component of an additive manufacturing system so that a required modelling environment can be maintained. Since additive manufacturing systems come in various sizes and build capacities, the size of the build chamber and freedom of movement therein should not be limited by such a sealed interface.

According to the present invention, there is provided an additive manufacturing system that addresses the aforementioned needs and concerns.

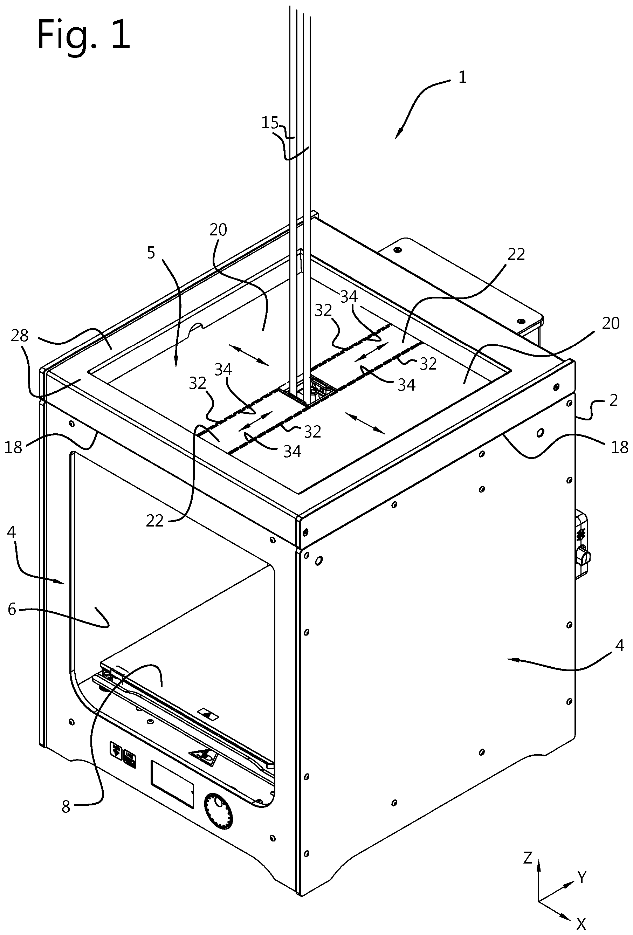

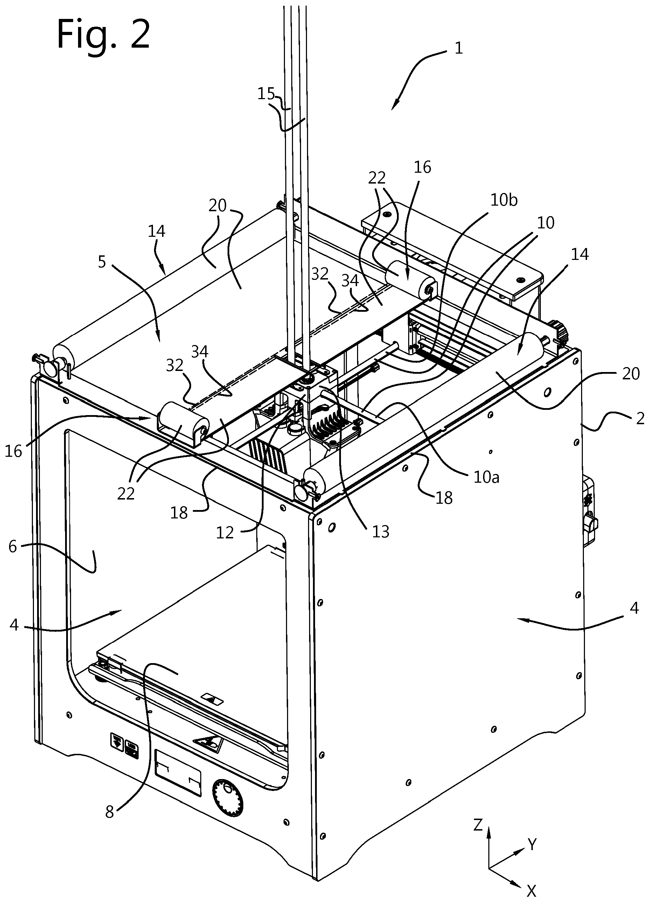

Figures 1 and 2 each show a three dimensional view of an embodiment of an additive manufacturing system 1 of the present invention. As depicted, the additive manufacturing system comprises a box-shaped build chamber 2 having a plurality of sides 4, 5 enclosing a build space 6. The build chamber 2 may be a square box, e.g. having equal height, width and length, but the build chamber 2 may also be a rectangular box, i.e. wherein the height, width and length of the build chamber 2 are different or partially different.

An object support base 8 is provided and movably arranged in a z-direction in the build space 6 as enclosed by the build chamber 2, wherein the additive manufacturing provide a motion control system configured to move the object support based 8 upward and downward within the build space 6 as required. For simplicity, the z-direction may be considered to be a vertical direction. In Figure 1 it is also indicated that x- and y- directions may be viewed as substantially horizontal directions perpendicular to the z-direction. In a typical embodiment, the object support base 8 may be considered to be a flat plate, usually horizontal, and parallel to a surface defined by the x- and y-directions.

The additive manufacturing system 1 further comprises a movably gantry 10 having mounted thereon a nozzle head assembly 12 for depositing modelling material onto the object support base 8. As depicted, the gantry 10 is configured to move the nozzle head assembly 12 relative to the object support base 8, thus primarily move the nozzle head assembly 12 in the x- and y-directions as shown by guiding bars/rods in the x- and y directions, see x-bars 10a and y-bars 10b . As the gantry 10 primarily moves in x-y directions, the gantry 10 may be referred to as an x-y gantry 10. In an exemplary embodiment, the nozzle head assembly 12 may further comprises a top portion 13 which is connected to various supply lines 15, such as electrical and communication supply lines as well as modelling material supply lines (e.g. Bowden/filament tubes).

To allow the nozzle head assembly 12 to access the build space 6 of the build chamber 2, one of the plurality sides 4 is adapted to allow penetration of system component there through. In the particular embodiments shown, a top/upper side 5 of the build chamber 2 may be adapted such that the nozzle head assembly 12 penetrates the top/upper side 5 to allow modelling material to be deposited on the object support base 8. However, as the nozzle head assembly 12 is able to move in the x-y plane during a modelling session, the top/upper side 5 will need to be able to accommodate such movements whilst maintaining closure of the build chamber 2. Maintaining closure of the one of the plurality of sides 4, in this case the top/upper side 5, then allows control of the build space environment such as the temperature in case the build chamber 2 is to be heated.

According to the present invention, to provide a side such as the top side 5 of the build chamber 2 which is penetrable by system components subject to movement, the additive manufacturing system 1 further comprises a plurality of roller units 14, 16 evenly arranged along a circumference 18 of one of the plurality of sides 4 of the build chamber 2. In the embodiment shown, the one of the plurality of sides 4 may be considered to be the top/upper side 5, so that the circumference 18 may be associated with a circumference of the top/upper side 5. For further simplicity, the circumference 18 may also be viewed as extending along edges of the box-shaped build chamber 2 defining a perimeter or boundary of one of the plurality of side 4.

As mentioned above, the plurality of roller units 14, 16 are evenly arranged along the circumference 18 of one of the plurality of sides 4, e.g. the top side 5, meaning that along each edge of the circumference 18 a roller unit 14, 16 is positioned. As the build chamber 2 is generally rectangular, the circumference 18 comprises four edges, e.g. straight edges, along each of which a roller unit 14, 16 is positioned, thus four roller units 14, 16 in total with one at each edge of the build chamber 5 defining one of the plurality of side 4.

In Figure 1 and 2 it is further shown that each of the roller units 14, 16 comprises a relatively thin cover sheet or foil 20, 22 partially rolled into coil form and wherein each cover sheet 20, 22 extends from the roller unit 14, 16 to the nozzle head assembly 12 for closing the build chamber 2 there between. It is understood that a first end of each cover sheet 20, 22 is partially rolled into coil form and where a second end of each cover sheet 20, 22 extends to the nozzle head assembly 12 spanning the distance between the roller unit 14, 16 and the nozzle head assembly 12. So each cover sheet 20, 22 spans the space between its associated roller unit 14, 16 and the nozzle head assembly 12. To allow full movement and of the nozzle head assembly in both the x- and y-directions, each roller unit 14, 16 is then configured to allow the cover sheet 20, 22 to coil and uncoil in correspondence to the movement of the nozzle head assembly 12.

According to the present invention, in case the nozzle head assembly 12 moves toward a roller unit 14, 16 then the cover sheet 20, 22 thereof rolls into further coil form. Conversely, when the nozzle head assembly 12 moves away from a roller unit 14, 16 then the cover sheet 20, 22 thereof is allowed to further uncoil so as to span the increased distance between the roller unit 14, 16 and the nozzle head assembly 12. Since the plurality of roller units 14, 16 are evenly arranged around the circumference 18, the one of the plurality of sides 4 such as the upper/top side 5 is fully covered by the plurality of cover sheets 20, 22 and allow free movement of the nozzle head assembly 12 in the x- and y- directions whilst maintaining closure of the build chamber 2.

The plurality of roller units 14, 16 and cover sheets 20, 22 of the present invention provides significant advantages over accordion-folded baffles of prior art manufacturing systems. In particular, the roller units 14, 16 are scalable in the sense that longer distances can be covered by providing roller units 14, 16 with longer or larger pieces of cover sheets 20, 22. Moreover, increasing the size of the build chamber 2 need not significantly increase resistance against coiling and uncoiling as forces needed to retract and extend each cover sheet 20, 22 does not increase as significantly compared to accordion-folded baffles that behave like spring elements.

Another advantage of the present invention is that when the nozzle head assembly 12 moves toward a side 4 of the build chamber 2, a roller unit 14, 16 associated with that side 4 does not prematurely block movement of the nozzle head assembly 12 as the cover sheet 20, 22 can be coiled and retracted as much as needed. Therefore, the nozzle head assembly 12 is provided with more freedom of movement for a given size of a build chamber 2.

In an embodiment, each of the roller units 14, 16 may provide a cover sheet 20, 22 biased toward self-coiling, which would keep the cover sheets 20, 22 under tension and prevent sagging. However, self-coiling cover sheets 20, 22 do tend to impose progressively increasing pull forces on the nozzle head assembly 12 when extending, thus wherein the pulling force increases rapidly when the cover sheets 20, 22 extend further away from the roller unit 14, 16. As a result, motor and actuator control of the x-y gantry 10 should account for these pulling forces when moving the nozzle head assembly 12.

In order to minimize forces on the nozzle head assembly 12 imposed by the cover sheets 20, 22, each of the covers sheets 20, 22 is configured as a self-uncoiling cover sheet. In this embodiment each cover sheets 20, 22 exhibits a bias toward uncoiling, i.e. being biased to fully open and unroll toward a flat sheet if no bending forces are imposed. This self-uncoiling behaviour allows each cover sheet 20, 22 to span the space between the nozzle head assembly 12 and roller units 14, 16 with maximized flatness and minimal sagging. Moreover, a further advantage is that forces required to coil a self-uncoiling cover sheet 20, 22 can be made considerably smaller than forces required to uncoiling or unroll a self-coiling cover sheet.

More precisely, a self-uncoiling cover sheet/foil 20, 22 according to the present invention imposes a nearly constant but small force against bending which is largely independent of the length of extension or retraction of the cover sheet 20, 22 from or into a roller unit 14, 16. So moving the nozzle head assembly 12 toward or away from a side 4 of the build chamber 2 requires little to no additional effort as the resistance/forces imposed by a cover sheet 20, 22 undergoing coiling are largely cancelled by an opposing cover sheet 20, 22 that uncoils.

In an embodiment, each cover sheet 20, 22 comprises smooth surfaces, e.g. opposing surfaces, which allow smooth coiling and uncoiling into and from a roller unit 14,16 due to minimal sliding resistance between coiled surfaces.

In an advantageous embodiment, each cover sheet 20, 22 comprises a fibrous core layer and smooth outer surface coatings. This embodiment provides sufficient flexibility for coiling and uncoiling a cover sheet 20, 22 but it also allows for self-uncoiling behavior due to bending resistance from the smooth outer surface coatings. In an exemplary embodiment, the fibrous core layer may be a glass fiber core layer and the smooth outer surface coatings may comprise PTFE (polytetrafluoroethylene), wherein the PTFE largely provides the self-uncoiling property of the cover sheet 20, 22. Furthermore, covers sheets 20, 22 made from glass fiber core layer and PTFE outer layers exhibit improved thermal insulation when the building chamber 2 is to be used under heated conditions.

In a further advantage embodiment, each cover sheet 20, 22 is made of a uniform/solid and homogenous sheet material, [claim 5] i.e. not made of separate layers. The homogenous sheet material is configured to provide self-uncoiling behavior and thus biases the cover sheets 20, 22 to unroll as a flat sheets when no bending forces are imposed. In an exemplary embodiment, the homogenous sheet material may be polyetherimide (PEI), polycarbonate (PC), polyethylene terephthalate (PET) or PTFE. These materials reduce cost of manufacturing the homogenous sheet material but also provide flexibility with regard to the color and/or transparency/translucency of each cover sheet 20, 22. Note that other plastic materials may be used for the cover sheets 20, 22 to provide self-uncoiling behavior, wherein the materials preferably exhibit minimal creep or cold flow as well as sufficient rigidity and stiffness.

With further reference to Figures 1 and 2, the plurality of roller units 14, 16 may comprise a first pair of opposing roller units 14 stationary arranged along a first pair of opposing edges of the one of the plurality of sides 4 of the build chamber 2, wherein the first pair of opposing roller units 14 comprise a first pair of cover sheets 20. A second pair of opposing rollers units 16 may be provided and moveably arranged along a second pair of opposing edges of the one of the plurality of sides 4, wherein the second pair of opposing roller units 16 comprise a second pair of cover sheets 22. The first and second pair of opposing edges define the circumference 18, which may be viewed as being rectangular, so that the first pair of opposing edges are perpendicular to the second pair of opposing edges. Forward edges 32 of the first pair of cover sheets 20 are then in sealed and movable engagement with respect to side edges 34 of the second pair of cover sheets 22.

Note that in this embodiment the forward edges 32 of the first pair of cover sheets 20 are seen as those edges that engage, at least in part, the nozzle head assembly 12. The side edges 34 of the second pair of cover sheets 22 are seen as edges that engage, at least in part, the forward edges 32 of the first pair of cover sheets 20.

As depicted, the first pair of cover sheets 20 allow for e.g. x-movement of the nozzle head assembly 12 and where the second pair of cover sheets 22 allow for y-movement of the nozzle head assembly 12. Since the second pair of roller units 16 are moveably arranged with respect to an edge of the build camber 2, e.g. along a part of the circumference 18, allows the second pair of cover sheets 22 to move in the x-direction in unison with the nozzle head assembly 12. In an exemplary embodiment the second pair of roller units 16 are attached to the x-y gantry 10 for being moved in unison with the x-direction of the nozzle head assembly 12.

The forward edges 32 of the first pair of cover sheets 20 are in sealed and movable engagement with respect to the side edges 34 of the second pair of cover sheets 22, so that the second pair of covers sheets 22 enable movement of the nozzle head assembly 12 in the y-direction as depicted. In this way a tight, sealed closure of the build chamber 2 is achieved whilst allowing complete freedom of movement of the nozzle head assembly 12 in the x- and y-directions.

As shown in Figure 1 and 2, to allow maximum movement of the nozzle head assembly 12 in the depicted x-direction, the second pair of cover sheets 22 have a width spanning approximately a width portion of the nozzle head assembly 12 to which it connects, e.g. the top portion 13. This ensures that the side edges 34 of the second pair of covers sheets 22 do not limit x-direction movement because of early contact between the first and second pair of roller units 14, 16. In an exemplary embodiment, the first pair of covers sheet 20 will typically span a width equal to the build chamber 2 and wherein the second pair of covers sheets 22 span a width portion of the nozzle head assembly 12 and a such are significantly narrower that the first pair of covers sheets 20.

To improve accurate movement and sealed engagement between the first and second pair of cover sheets 20, 22, an embodiment is provided wherein the second pair of cover sheets 22 partially overlap the first pair of cover sheets 20, so that any gaps between the first and second pair of cover sheets 20, 22 through which air leakage could occur is minimized. In a particular embodiment, the side edges 34 of the second pair of cover sheets 22 overlap in part the forward edges 32 of the first pair of cover sheets 20. This not only improves sealed engagement between these edges 32, 34 by any sagging of the second pair of cover sheets 22 is eliminated as well. Sagging of the forward edges 32 may be avoided in an embodiment wherein each forward edge 32 of the first pair of cover sheets 20 is provided with an elongated rod/bar (not shown) extending over a width of the first pair of cover sheets 20. Such elongated bar/rods may also comprise opposing ends configured to support and guide the first pair of cover sheets 20 along edges of the build chamber 2 in the x-direction.

The sealed engagement between the first and second pair of cover sheets 20, 22 can be further improved by providing a guide rail (not shown) between each mutually engaging forward edge 32 and side edge 34. Such a guide rail would not only eliminate any sagging of the forward edges 32, but it would also provide guided sliding movement of the side edges 34 and prevent sagging thereof. In an exemplary embodiment, a guide rail may be affixed to each forward edge 32 and wherein such guide rail comprises a lengthwise slot for receiving an engaging side edge 34. Such a guide rail may also comprise opposing ends configured to support and guide the first pair of cover sheets 20 along edges of the build chamber 2 in the x-direction.

As further depicted in Figure 1 and 2, in an embodiment the x-y gantry 10 may be arranged within the build chamber 2 and wherein each cover sheet 20, 22 is connected to a top portion 13 of the nozzle head assembly 12. In this embodiment, the x-y gantry 10 and the nozzle head assembly 12 are arranged within the build chamber 2, e.g. underneath the plurality of cover sheets 20, 22, so that only one or more external lines 15 connected to the top portion 13 extend through the cover sheets 20, 22. For example, one or more external Bowden tubes or filament supply lines may be connected to a top portion 13 of the nozzle head assembly 12. Note that in this embodiment the entire x-y gantry 10 is arranged within the build chamber 2 and a such would be subjected to the environmental conditions in the build chamber 2 during a modelling process.

In an alternative embodiment, the x-y gantry 10 may be arranged external to the build chamber 2 and wherein each of the cover sheets 20, 22 is connect to a bottom portion (not shown) of the nozzle head assembly 12. This embodiment allows the x-y gantry 10 to remain external to the build chamber 2, so that only a nozzle extrusion tip of the nozzle head assembly 12 extends beyond the plurality of cover sheets 20, 22 into the build space 6. In this embodiment, only the nozzle extrusion tip is subjected to the environmental conditions within the build chamber 2.

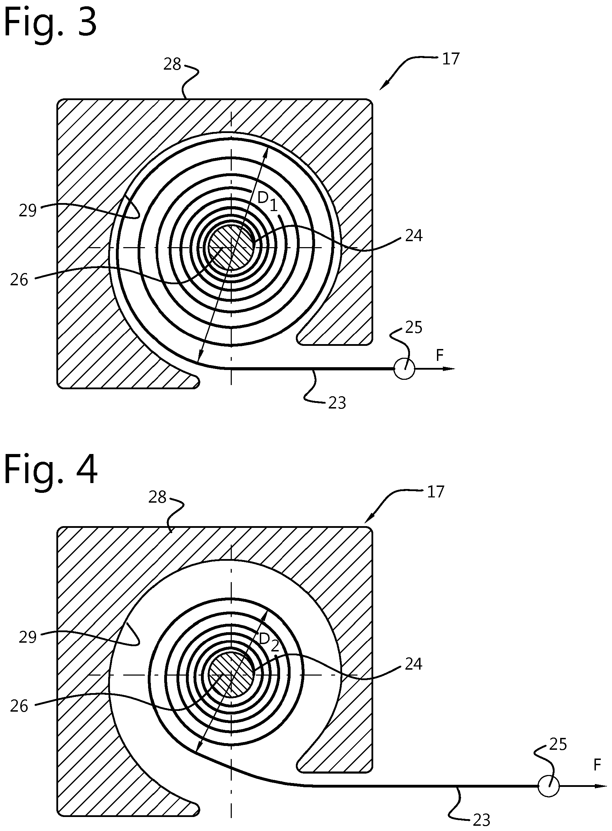

Figures 3 and 4 each show schematic embodiments of a single roller unit 17 with cover sheet 23 in a retracted and extended coil configuration, respectively. For clarity, the depicted roller unit 17 and cover sheet 23 thereof may be seen as representing an embodiment of each of the roller units 14, 16 and their cover sheets 20, 22 depicted in Figure 1 and 2.

In Figure 3 a retracted coil configuration is shown of the cover sheet 23, wherein the cover sheet 23 is in a retracted position when the nozzle head assembly 12 (not shown) is proximal to the roller unit 17. Here, the nozzle head assembly 12 may be connected to a sheet connect point or rod 25 and wherein the connect point/rod 25 is positioned proximal to the roller unit 17.

The extended coil configuration is shown in Figure 4, showing the cover sheet 23 in an extended position which occurs when the nozzle head assembly 12 (not shown) is distal to the roller unit 17. Like Figure 3, the nozzle head assembly 12 may be connected to the sheet connect point or rod 25 which is now positioned distal to the roller unit 17.

It is further shown in Figure 3 and 4 that in an embodiment the roller unit 17 may comprise a rotatable shaft 26 connected to an end portion 24 the cover sheet 23 for coiling the cover sheet 23 around the shaft 26. This embodiment would allow, for example, rotation of the shaft 26 for forcible retracting, i.e. coiling, of the cover sheet 23. On the other hand, in alternative embodiments the shaft 26 need not be actively rotated for coiling the cover sheet 23. In an exemplary embodiment, the shaft 26 is an elongated shaft that extends along a part of the circumference 18, i.e. along an edge of one of the plurality of sides 4 as shown in Figure 1 and 2.

For example, as mentioned above, each of the covers sheets 20, 22 as shown in Figure 1 and Figure 2 may be configured as a self-uncoiling cover sheet, thus wherein each cover sheet 20, 22 exhibits a bias toward uncoiling and tends to fully open and unroll toward a flat sheet if no force acts upon the cover sheet. This is advantageous in that the self-uncoiling cover sheets 20, 22 impose a nearly constant but small force against bending, regardless of the length of extension/uncoiling or retraction/coiling of the cover sheets 20, 22 from or into the roller units 14, 16.

In light of the above, when the cover sheet 23 is a self-uncoiling cover sheet then a relatively small pulling force F is required on the cover sheet 23 for pulling the cover sheet 23 from a retracted coil configuration as shown in Figure 3 toward an extended coil configuration as shown in Figure 4. So due to self-uncoiling behaviour, the cover sheet 23 is biased to uncoil and as such tends to retract into the roller unit 17, hence requiring a pulling force F for preventing spontaneous retraction. As a result, the nozzle head assembly 12 is subjected to an opposing puling force from the cover sheet 23 at all times, i.e. when moving toward or away from the roller unit 17.

Figure 3 shows self-retraction of the cover sheet 23 in more detail. In this embodiment, due to the self-uncoiling behaviour, an overall coil diameter D1 of the cover sheet 23 increases with further retraction of the sheet connect point/rod 25. Note that an end portion 24 of the cover sheet 23 is connected to the shaft 26 so that the cover sheet 23 is prevented from uncoiling fully. During coiling/retraction, a sheet spiral is formed of the cover sheet 23 toward a larger coil diameter D1 when the cover sheet 23 retracts into the roller unit 17. A further advantage of self-uncoiling behaviour is that coiled outer surfaces of the cover sheet 23 are spaced apart and as such contact resistance between the various coiled surfaces is prevented.

Referring to Figure 4, when the cover sheet 23 is a self-uncoiling cover sheet and the nozzle head assembly 12 moves away from the roller unit 17, then the relatively small pulling force F must be overcome to extend the cover sheet 23 further from the roller unit 17. As an end portion 24 of the cover sheet 23 is connected to the shaft 26, the cover sheet 23 is prevented from uncoiling, so that during extension of the cover sheet 23 the sheet spiral forms toward a smaller coil diameter D2, i.e. D2 < D1.

In an embodiment, the roller unit 17 comprises a housing 28 for enclosing the coiled cover sheet 23. The housing provides protection but also limits a maximum coil diameter D1 as depicted in Figure 3. So when the cover sheet 23 is coiled further into the roller unit 17, the housing 28 may limit the maximum coil diameter D1. This allows a sheet spiral of the cover sheet 23 to be formed with smaller distances between turns of the cover sheet 23.

As shown in Figure 3, in embodiment the housing 28 may comprises a circular inner surface 29, which facilitates coiling of the cover sheet 23 when a maximum coil diameter D1 is reached. In an advantageous embodiment, the circular inner surface 29 of the housing 28 may comprise a coating or liner configured to minimize friction should the cover sheet 23 come into contact with the inner surface 29.

In an alternative embodiment, the housing 28 may comprises a rectangular inner surface, which may simplify the manufacturing of the housing 28. This embodiment facilitates a simple design for the housing 28 in the form of a rectangular shaped cover member 28 as shown in Figure 1. The rectangular inner surface may also be provided with a coating or liner configured to minimize friction should the cover sheet 23 come into contact with the inner surface.

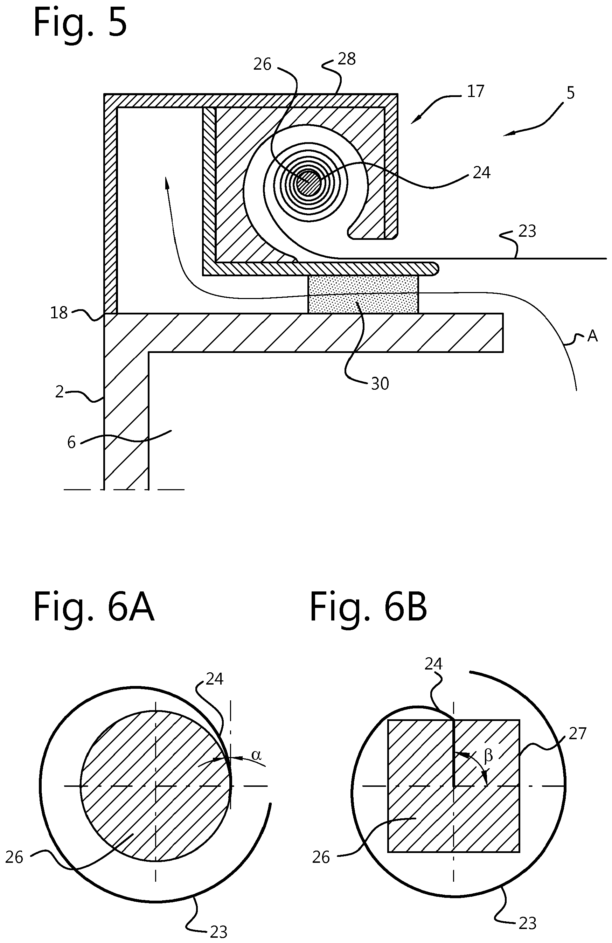

Figure 5 shows a cross section of a housing 28 used for a roller unit 17 according to an embodiment of the present invention. In the embodiment shown, the roller unit 17 comprises a housing 28 enclosing a (partially) coiled cover sheet 23. The cover sheet 23 comprises an end portion 24 connected that the shaft 26 and is coiled there around. The roller unit 17 and the housing 28 are arranged along a part of the circumference 18 of one of the plurality of sides 4, e.g. top/upper side 5, of the build chamber 2. Note that the roller under 17 and cover sheet 23 may be seen as an embodiment of each roller unit 14, 16 and covers sheet 20 , 22 as shown in Figure 1 and 2.

In an advantageous embodiment, the additive manufacturing system may further comprise an air permeable barrier 30 arranged between the housing 28 of a roller unit 17 and the build chamber 2. The air permeable barrier 30 allows for air flow "A" between the build space 6 and the external environment, thereby ventilating the build chamber 2 for maintaining a particular temperature, humidity, particle count etc. In an exemplary embodiment, the air permeable barrier 30 comprises an open cell foam, which provides sufficient permeability and heat resistance, and also provides air filtering.

As mentioned earlier with reference for Figure 3 and 4, and in view of Figure 1 and 2, in an embodiment each cover sheet 20, 22, 23 comprises an end portion 24 that is connected to a shaft 26 of a roller unit 14, 16, 17, so that the cover sheets 20, 22, 23 are able to coil around the shaft 26. In embodiments wherein each cover sheet 20, 22, 23 is a self-uncoiling cover sheet, then the cover sheets 20, 22, 23 are biased to coil around the shaft 26 spontaneously when no forces act upon the cover sheet. In an advantageous embodiment the shaft 26 may be a rotatable shaft 26 so that coiling of each cover sheet 20, 22, 23 around the shaft 26 is facilitated, where the cover sheets 20, 22, 23 may, but need not, be self-uncoiling.

Figure 6A an 6B each show a cross section of a shaft 26 as used for a roller unit 14, 16, 17 according to an embodiment of the present invention. In the embodiment of Figure 6A, the shaft 26 is a round/circular shaft and an end portion 24 of a cover sheet 23 is attached thereto. In an advantageous embodiment, the end portion 24 connects to the shaft 26, e.g. lengthwise, in tangential fashion with respect to an outer surface of the shaft 26. More precisely, as shown in Figure 6A the end portion 24 engages the shaft 26 at a relatively small angle α with respect to the outer surface of the shaft 26. In an embodiment the angle α may be chosen between 0 and 45° degrees, thereby preventing that the cover sheet 24 bends sharply as it coils around the shaft 26. In an advantageous embodiment the angle α may be chosen between 0 and 20° degrees, e.g. between 0 and 10°, so that the end portion 24 engages the shaft 26 with a smooth curvature free from sharp bends. Another advantage of such a small angle α is that the cover sheet 23 coils around the shaft 26 so that a centre point of the coiled cover sheet 23 substantially coincides with a centre point of the shaft 26. Such closely positioned centre points yield a smaller overall coil diameter D1 for a retracted coil configuration as shown in Figure 3. Having a smaller coil diameter D1 in a retracted configuration also minimizes or eliminates any contact between the coiled cover sheet 23 and an inner surface 29 of the housing 28, for example.

Figure 6B shows an alternative embodiment of a shaft 26 of a roller unit, wherein the end portion 24 of the cover sheet 23 extends into the shaft 26, allowing for strong attachment of the end portion 24 to the shaft 26. As shown, in an exemplary embodiment the end portion 24 engages the shaft in perpendicular fashion, i.e. at an angle β substantially 90° degrees, wherein a lengthwise slot/groove in the shaft 26 may be provided for easy insertion of the end portion 24. Here, the shaft 26 may comprise a rectangular cross section, e.g. square cross section.

As further depicted, the end portion 24 may extend into the shaft 26 at a midpoint of a side surface of the rectangular/square shaft 26 for simplifying attachment of the cover sheet 23, e.g. using a lengthwise slot/groove as mentioned earlier. However, in this embodiment the coiled cover sheet 23 may have a centre point which is further offset from a centre point of the shaft 26. Such centre point offset between the coiled cover sheet 23 and the rectangular/square shaft 26 may then lead to a larger coil diameter D1 in a retracted coil configuration as depicted in Figure 3, possibly allowing the coiled cover sheet 23 to come into contact with an inner surface 29 of the housing 28.

To reduce the aforementioned centre point offset between the coiled cover sheet 23 and the rectangular/square shaft 26, an embodiment is provided wherein the end portion 24 of the cover sheet 23 may be connected parallel/tangentially to a side surface 27 of the shaft 26. That is, the end portion 24 of the cover sheet 23 may be attached flat on the side surface 27, thereby allowing the cover sheet 23 to coil around the rectangular/square shaft 26 such that the centre point of the coiled cover sheets 23 approaches the centre point of the shaft. This also reduces the coil diameter D1 in the retracted coil configuration as shown in Figure 3. In a further embodiment the centre point offset between the coiled cover sheet 23 and the rectangular/square shaft 26 may also be reduced by allowing the end portion 24 to extend into the shaft 26 in slanted fashion, i.e. at an angle β larger than 90° degrees, e.g. between 110° and 160° degrees, e.g. around 135° degrees.
It should be noted that the shaft 26 as explained above need not be solid as the figures 3, 4, 5, 6A, 6B would suggest. So in an embodiment the shaft 26 may be a solid or a hollow shaft, wherein a solid or hollow shaft 26 may be obtained through an extrusion process. This also holds for a solid or hollow shaft 26 that is a round or rectangular/square shaft 26. An extruded shaft 26 is particularly advantageous when a solid or hollow shaft is to be provided with a lengthwise groove/slot for attaching the end portion 24 of the cover sheet 23.

The present invention embodiments have been described above with reference to a number of exemplary embodiments as shown in and described with reference to the drawings. Modifications and alternative implementations of some parts or elements are possible, and are included in the scope of protection as defined in the appended claims.

## Claims

1. An additive manufacturing system for building three-dimensional objects, comprising a box-shaped build chamber (2) having a plurality of sides (4) enclosing a build space (6), an object support base (8) movably arranged in a z-direction in the build space (6), an x-y gantry (10) having mounted thereon a nozzle head assembly (12) for depositing modelling material onto the object support base (8) and wherein the x-y gantry (10) is configured to move the nozzle head assembly (12) relative to the object support base (8), **characterized in that** the additive manufacturing system further comprises
a plurality of roller units (14, 16) evenly arranged along a circumference (18) of one side (5) of the plurality of sides (4) of the build chamber (2), wherein each roller unit (14, 16) comprises a cover sheet (20, 22) rolled at least in part into coil form and wherein each cover sheet (20, 22) extends from the roller unit (14, 16) to the nozzle head assembly (12) for closing the build chamber (2) there between, and wherein each roller unit (14, 16) is configured to allow the cover sheet (20, 22) to coil and uncoil in correspondence to the movement of the nozzle head assembly (12).

2. The additive manufacturing system according to claim 1, wherein each cover sheet (20, 22) is configured as a self-uncoiling cover sheet.

3. The additive manufacturing system according to claim 1 or 2, wherein each cover sheet (20, 22) comprises smooth surfaces.

4. The additive manufacturing system according to any one of claims 1-3, wherein each cover sheet (20, 22) comprises a fibrous core layer and smooth outer surface coatings.

5. The additive manufacturing system according to any one of claims 1-3, wherein each cover sheet (20, 22) is made of a uniform and homogenous sheet material.

6. The additive manufacturing system according to any one of claims 1-5, wherein each roller unit (14, 16) comprises a rotatable shaft (26) connected to an end portion (24) of the cover sheet (20, 22, 23) for coiling the cover sheet (20, 22, 23) around the shaft (26).

7. The additive manufacturing system according to claim 6, wherein the end portion (24) of the cover sheet (23) connects to the shaft (26) tangentially with respect to an outer surface of the shaft (26).

8. The additive manufacturing system according to claim 6 or 7, wherein the end portion (24) of the cover sheet (23) extends into the shaft (26).

9. The additive manufacturing system according to any one of claims 1-8, wherein each roller unit (14, 16, 17) comprises a housing (28) for enclosing a coiled cover sheet (20, 22, 23).

10. The additive manufacturing system according to claim 9, wherein the housing (28) of each roller unit (14, 16, 17) comprises a rectangular inner surface (29) enclosing the coiled cover sheet (20, 22, 23).

11. The additive manufacturing system according to claim 9, wherein the housing (28) of each roller unit (14, 16, 17) comprises a circular inner surface (29) enclosing the coiled cover sheet (20, 22, 23).

12. The additive manufacturing system according to any one of claims 9-11, further comprising an air permeable barrier (30) arranged between the housing (28) and the build chamber (2).

13. The additive manufacturing system according to any one of claims 1-12, wherein the plurality of roller units (14, 16) comprise
a first pair of opposing roller units (14) stationary arranged along a first pair of opposing edges of the one of the plurality of sides (4) of the build chamber (2), the first pair of opposing roller units (14) comprising a first pair of cover sheets (20); and
a second pair of opposing rollers units (16) moveably arranged along a second pair of opposing edges of the one of the plurality of sides (4) of the build chamber (2), the second pair of opposing roller units (16) comprising a second pair of cover sheets (22), and
wherein forward edges (32) of the first pair of cover sheets (20) are in sealed and movable engagement with side edges (34) of the second pair of cover sheets (22).

14. The additive manufacturing system according to claim 13, wherein the second pair of cover sheets (22) partially overlap the first pair of cover sheets (20).

15. The additive manufacturing system according to claim 13 or 14, wherein a guide rail is arranged between the forward edges (32) and the side edges (34) of the first and second pair of cover sheets (20, 22), respectively.

## Patentansprüche

1. System zur additiven Fertigung zum Herstellen dreidimensionaler Gegenstände, das eine kastenförmige Produktionskammer (2) mit mehreren Seiten (4), die einen Produktionsraum (6) umschließen, einen Gegenstandsträgersockel (8), der in einer z-Richtung im Produktionsraum (6) beweglich angeordnet ist, ein x-y-Portal (10) mit einer darauf angebrachten Düsenkopfanordnung (12) zum Auftragen eines Modellierungsmaterials auf den Gegenstandsträgersockel (8) umfasst und wobei das x-y-Portal (10) konfiguriert ist, die Düsenkopfanordnung (12) in Bezug auf den Gegenstandsträgersockel (8) zu bewegen, **dadurch gekennzeichnet, dass** das System zur additiven Fertigung ferner mehrere Walzeneinheiten (14, 16) umfasst, die entlang eines Umfangs (18) einer Seite (5) der mehreren Seiten (4) der Produktionskammer (2) gleichmäßig angeordnet sind, wobei jede Walzeneinheit (14, 16) eine Abdeckfolie (20, 22) umfasst, die zumindest teilweise in eine Spulenform aufgerollt ist, und wobei sich jede Abdeckfolie (20, 22) zum Verschließen der Produktionskammer (2) dazwischen von der Walzeneinheit (14, 16) zur Düsenkopfanordnung (12) erstreckt und wobei jede Walzeneinheit (14, 16) konfiguriert ist zu ermöglichen, dass sich die Abdeckfolie (20, 22) in Übereinstimmung mit der Bewegung des Düsenkopfanordnung (12) aufrollt und entrollt.

2. System zur additiven Fertigung nach Anspruch 1, wobei jede Abdeckfolie (20, 22) als eine selbst entrollende Abdeckfolie konfiguriert ist.

3. System zur additiven Fertigung nach Anspruch 1 oder 2, wobei jede Abdeckfolie (20, 22) glatte Oberflächen umfasst.

4. System zur additiven Fertigung nach einem der Ansprüche 1-3, wobei jede Abdeckfolie (20, 22) eine Faserkernschicht und glatte Außenflächenbeschichtungen umfasst.

5. System zur additiven Fertigung nach einem der Ansprüche 1-3, wobei jede Abdeckfolie (20, 22) aus einem einheitlichen und homogenen Folienmaterial hergestellt ist.

6. System zur additiven Fertigung nach einem der Ansprüche 1-5, wobei jede Walzeneinheit (14, 16) eine drehbare Welle (26), die zum Aufrollen der Abdeckfolie (20, 22, 23) um die Welle (26) mit einem Endabschnitt (24) der Abdeckfolie (20, 22, 23) verbunden ist, umfasst.

7. System zur additiven Fertigung nach Anspruch 6, wobei der Endabschnitt (24) der Abdeckfolie (23) in Bezug auf eine Außenfläche der Welle (26) tangential mit der Welle (26) verbunden ist.

8. System zur additiven Fertigung nach Anspruch 6 oder 7, wobei sich der Endabschnitt (24) der Abdeckfolie (23) in die Welle (26) erstreckt.

9. System zur additiven Fertigung nach einem der Ansprüche 1-8, wobei jede Walzeneinheit (14, 16, 17) ein Gehäuse (28) zum Umschließen einer aufgerollten Abdeckfolie (20, 22, 23) umfasst.

10. System zur additiven Fertigung nach Anspruch 9, wobei das Gehäuse (28) jeder Walzeneinheit (14, 16, 17) eine rechtwinklige Innenfläche (29) umfasst, die die aufgerollte Abdeckfolie (20, 22, 23) umschließt.

11. System zur additiven Fertigung nach Anspruch 9, wobei das Gehäuse (28) jeder Walzeneinheit (14, 16, 17) eine kreisförmige Innenfläche (29) umfasst, die die aufgerollte Abdeckfolie (20, 22, 23) umschließt.

12. System zur additiven Fertigung nach einem der Ansprüche 9-11, das ferner eine luftdurchlässige Sperre (30) umfasst, die zwischen dem Gehäuse (28) und der Produktionskammer (2) angeordnet ist.

13. System zur additiven Fertigung nach einem der Ansprüche 1-12, wobei die mehreren Walzeneinheiten (14, 16) Folgendes umfassen:
ein erstes Paar gegenüberliegender Walzeneinheiten (14), die entlang eines ersten Paares gegenüberliegender Kanten der einen der mehreren Seiten (4) der Produktionskammer (2) feststehend angeordnet sind, wobei das erste Paar gegenüberliegender Walzeneinheiten (14) ein erstes Paar Abdeckfolien (20) umfasst; und
ein zweites Paar gegenüberliegender Walzeneinheiten (16), die entlang eines zweiten Paares gegenüberliegender Kanten der einen der mehreren Seiten (4) der Produktionskammer (2) beweglich angeordnet sind, wobei das zweite Paar gegenüberliegender Walzeneinheiten (16) ein zweites Paar Abdeckfolien (22) umfasst, und
wobei sich die Vorderkanten (32) des ersten Paares Abdeckfolien (20) in abgedichtetem und beweglichem Eingriff mit den Seitenkanten (34) des zweiten Paares Abdeckfolien (22) befinden.

14. System zur additiven Fertigung nach Anspruch 13, wobei das zweite Paar Abdeckfolien (22) das erste Paar Abdeckfolien (20) teilweise überlappt.

15. System zur additiven Fertigung nach Anspruch 13 oder 14, wobei eine Führungsschiene zwischen den Vorderkanten (32) und den Seitenkanten (34) des ersten bzw. zweiten Paares Abdeckfolien (20, 22) angeordnet ist.

## Revendications

1. Système de fabrication additive pour la construction d'objets tridimensionnels, comprenant une chambre de construction en forme de boîte (2) ayant une pluralité de côtés (4) renfermant un espace de construction (6), une base de support d'objet (8) agencée de manière mobile dans une direction z dans l'espace de construction (6), un portique x-y (10) sur lequel est monté un ensemble de tête de buse (12) pour déposer du matériau de modélisation sur la base de support d'objet (8), et dans lequel le portique x-y (10) est configuré pour déplacer l'ensemble de tête de buse (12) par rapport à la base de support d'objet (8), **caractérisé en ce que**
le système de fabrication additive comprend en outre
une pluralité d'unités de rouleau (14, 16) agencées de manière régulière le long d'une circonférence (18) d'un premier côté (5) de la pluralité de côtés (4) de la chambre de construction (2), dans lequel chaque unité de rouleau (14, 16) comprend une feuille de recouvrement (20, 22) enroulée au moins en partie sous une forme de bobine, et dans lequel chaque feuille de recouvrement (20, 22) s'étend de l'unité de rouleau (14, 16) à l'ensemble de tête de buse (12) pour fermer la chambre de construction (2) entre les deux, et dans lequel chaque unité de rouleau (14, 16) est configurée pour permettre à la feuille de recouvrement (20, 22) de s'enrouler et de se dérouler en correspondance avec le mouvement de l'ensemble de tête de buse (12).

2. Système de fabrication additive selon la revendication 1, dans lequel chaque feuille de recouvrement (20, 22) est configurée sous la forme d'une feuille de recouvrement à déroulement automatique.

3. Système de fabrication additive selon la revendication 1 ou 2, dans lequel chaque feuille de recouvrement (20, 22) comprend des surfaces lisses.

4. Système de fabrication additive selon l'une quelconque des revendications 1 à 3, dans lequel chaque feuille de recouvrement (20, 22) comprend une couche de noyau fibreuse et des revêtements de surface extérieure lisses.

5. Système de fabrication additive selon l'une quelconque des revendications 1 à 3, dans lequel chaque feuille de recouvrement (20, 22) est réalisée en un matériau en feuille uniforme et homogène.

6. Système de fabrication additive selon l'une quelconque des revendications 1 à 5, dans lequel chaque unité de rouleau (14, 16) comprend un arbre rotatif (26) connecté à une partie d'extrémité (24) de la feuille de recouvrement (20, 22, 23) pour enrouler la feuille de recouvrement (20, 22, 23) autour de l'arbre (26).

7. Système de fabrication additive selon la revendication 6, dans lequel la partie d'extrémité (24) de la feuille de recouvrement (23) se connecte tangentiellement à l'arbre (26) par rapport à une surface extérieure de l'arbre (26).

8. Système de fabrication additive selon la revendication 6 ou 7, dans lequel la partie d'extrémité (24) de la feuille de recouvrement (23) s'étend jusque dans l'arbre (26).

9. Système de fabrication additive selon l'une quelconque des revendications 1 à 8, dans lequel chaque unité de rouleau (14, 16, 17) comprend un logement (28) pour renfermer une feuille de recouvrement enroulée (20, 22, 23).

10. Système de fabrication additive selon la revendication 9, dans lequel le logement (28) de chaque unité de rouleau (14, 16, 17) comprend une surface intérieure rectangulaire (29) renfermant la feuille de recouvrement enroulée (20, 22, 23).

11. Système de fabrication additive selon la revendication 9, dans lequel le logement (28) de chaque unité de rouleau (14, 16, 17) comprend une surface intérieure circulaire (29) renfermant la feuille de recouvrement enroulée (20, 22, 23).

12. Système de fabrication additive selon l'une quelconque des revendications 9 à 11, comprenant en outre une barrière perméable à l'air (30) agencée entre le logement (28) et la chambre de construction (2).

13. Système de fabrication additive selon l'une quelconque des revendications 1 à 12, dans lequel la pluralité d'unités de rouleau (14, 16) comprend
une première paire d'unités de rouleau opposées (14) agencées stationnaires le long d'une première paire de bords opposés du premier de la pluralité de côtés (4) de la chambre de construction (2), la première paire d'unités de rouleau opposées (14) comprenant un première paire de feuilles de recouvrement (20) ; et
une seconde paire d'unités de rouleau opposées (16) agencées de manière mobile le long d'une seconde paire de bords opposés du premier de la pluralité de côtés (4) de la chambre de construction (2), la seconde paire d'unités de rouleau opposées (16) comprenant un seconde paire de feuilles de recouvrement (22) ; et
dans lequel des bords avant (32) de la première paire de feuilles de recouvrement (20) sont en contact étanche et mobile avec des bords latéraux (34) de la seconde paire de feuilles de recouvrement (22).

14. Système de fabrication additive selon la revendication 13, dans lequel la seconde paire de feuilles de recouvrement (22) chevauche partiellement la première paire de feuilles de recouvrement (20).

15. Système de fabrication additive selon la revendication 13 ou 14, dans lequel un rail de guidage est agencé entre les bords avant (32) et les bords latéraux (34) des première et seconde paires de feuilles de recouvrement (20, 22), respectivement.
